# EUROPEAN PATENT SPECIFICATION

(11) **EP 2 337 113 B1**
(45) Date of publication and mention of the grant of the patent: **13.03.2013**
(21) Application number: 10191310.1
(22) Date of filing: 16.11.2010
(51) Int. Cl.: H01M 2/10, H01M 10/052, H01M 10/058, H01M 6/42

(54) **Battery module having restrainer and method of fixing restrainer**
Batteriemodul mit Verzögerer und Verfahren zur Befestigung des Verzögerers
Module de batterie dotée d'une retenue et procédé de fixation de la retenue

(30) Priority: 18.12.2009 KR 20090126925
(43) Date of publication of application: 22.06.2011
(73) Proprietor: Samsung SDI Co., Ltd., Gyeonggi-do (KR); Robert Bosch GmbH, 70442 Stuttgart (DE)
(72) Inventor: Park, Shi-Dong, Gyeonggi-do (KR); Kim, Tae-Yong, Gyeonggi-do (KR); Kim, Charles, Gyeonggi-do (KR); Lee, Hyun-Ye, Gyeonggi-do (KR)
(74) Representative: Gulde Hengelhaupt Ziebig & Schneider

(56) References cited:
- EP-A1- 0 584 639
- EP-A1- 1 990 861
- EP-A2- 1 753 058
- EP-A2- 1 760 806
- JP-A- 2000 067 902
- JP-A- 2006 185 815
- US-A- 4 692 391

## Description

### BACKGROUND

### 1. Field

Embodiments relate to a battery module having a restrainer and a method of fixing the restrainer.

### 2. Description of the Related Art

A battery module, which is fabricated by connecting a plurality of batteries, is an element of a large capacity power supply unit. The battery module may be used as a power source in, e.g., electric cars.

The battery module generally includes, e.g., lithium ion batteries. Performance of the lithium ion battery rarely degrades, even with repeated charging/discharging operations. However, the lithium ion battery expands due to movement of lithium ions when the lithium ion battery is charged. Since the battery module includes a plurality of lithium ion batteries, the battery module may expand about 5 to 10 % larger than its original size. Thus, the battery module may be deformed. Accordingly, it may be difficult to attach/detach the battery module to/from a desired location; and an electric resistance of the lithium ion battery may increase. Moreover, when the battery module is used in an electric car, a battery pack including about eight battery modules may be mounted in the electric car. Thus, the deformation may become severe. Therefore, a battery module may include a restrainer for restraining the expansion of secondary batteries. For instance, European patent application EP 1 753 058 A2 discloses a battery module comprising two connection members for fixing the end plates and thus compressing the unit cells together. The restrainer may be fixed with an appropriate tensile force in order to stably restrain the expansion of the batteries. European patent application EP 1 990 861 A1 discloses a battery module comprising two metal straps for fixing the end plates, and a method of fixing the metal straps to the end plates, while the end plates are compressed by an external jig.

### SUMMARY

Embodiments are directed to a battery module having a restrainer and a method of fixing the restrainer, which represents advances over the related art.

It is a feature of an embodiment to provide a battery module including a restrainer having an improved fixing structure in order to stably restrain battery expansion.

At least one of the above and other features and advantages may be realized by providing a battery module in which a plurality of batteries in a battery unit are connected, the battery module including a pair of end plates facing each other; a restrainer coupled to the pair of end plates, the restrainer being for restraining expansion of the battery unit; and a coupling unit for coupling the end plates and the restrainer to each other, wherein the coupling unit includes a variable position coupling device configured to fix the restrainer and the end plate while varying a coupling location between the restrainer and the end plate.

One of the end plates and the restrainer are coupled to each other by the variable position coupling device, the coupling unit further includes a fixed position coupling device for fixing the restrainer and another of the end plates at a predetermined coupling position, and the other one of the end plates and the restrainer are coupled to each other by the position fixed coupling device. Preferably, the end plates are located on short lateral portions of the battery unit, while the restrainer is located on a long lateral portion of the battery unit. Preferably, the battery module comprises two restrainers located on both long lateral portions of the battery unit.

The fixed position coupling device includes bolts penetrating through the restrainer and the end plate, and nuts coupled to the bolts.

The variable position coupling device may include a wedge-shaped coupling portion, and the end plate and the restrainer may be coupled to each other in a wedge shape.

The wedge-shaped coupling portion may include a wedge-shaped recess in the end plate; and a wedge bar configured to push and deform a part of the restrainer so as to be matched with the wedge-shaped recess.

The wedge-shaped coupling portion may further include bolts penetrating through the wedge bar, through the elongated recesses in the restrainer, and through the end plate, and nuts coupled to end portions of the bolts.

The wedge-shaped coupling portion may include a wedge bar configured to push and deform the end plate and a part of the restrainer simultaneously so as to form a wedge-shape recess.

The wedge-shaped coupling portion may further include bolts penetrating through the wedge bar, through the elongated recesses in the restrainer, and through the end plate, and nuts coupled to end portions of the bolts.

The variable position coupling device may include a jagged hole penetrating the restrainer and including geared surfaces on inner walls thereof; and a jagged pin extending through the restrainer and the end plate, the jagged pin coupling the restrainer and the end plate to each other, and having a surface corresponding to a portion of the geared surfaces of the jagged hole.

The restrainer may have a height that is equal to or less than a height of the end plate.

At least one of the above and other features and advantages may also be realized by providing a method of fixing a restrainer to a pair of end plates installed at both ends of a battery unit in a battery module, the method including fixing a first end portion of the restrainer to one of the end plates; applying a tensile force to the restrainer by pulling a second end portion of the restrainer toward the other one of the end plates; and coupling the second end portion of the restrainer to the other end plate by means of a variable position coupling device so as to fix the restrainer in a state where the tensile force is applied to the restrainer.

Fixing the first end portion of the restrainer includes inserting bolts through the restrainer and the end plate; and coupling nuts to ends of the bolts.

Coupling the other end of the restrainer may include pressing a part of the restrainer into a wedge-shaped recess in the end plate with a wedge bar such that the part of the restrainer is inserted in the wedge-shaped recess.

Coupling the other end of the restrainer may further include inserting bolts through the wedge bar, through the elongated recesses in the restrainer, and through the end plate; and coupling nuts to ends of the bolts.

Coupling the other end of the restrainer may include pressing the restrainer and the end plate together with the wedge bar to couple the restrainer and the end plate to each other.

Coupling the other end of the restrainer may further include inserting bolts through the wedge bar, through the elongated recesses in the restrainer, and through the end plate; and coupling nuts to ends of the bolts.

Coupling the other end of the restrainer may further include forming a jagged hole in the restrainer such that the jagged hole includes geared surfaces; and inserting a jagged pin into the jagged hole, the jagged pin having a shape corresponding to the geared surfaces so that the jagged pin couples the restrainer and the end plate to each other while penetrating the restrainer and the end plate.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1 illustrates a perspective view of a battery module according to an embodiment;

FIG. 2 illustrates an exploded view of a part A of FIG. 1;

FIGS. 3A and 3B illustrate diagrams showing a part B of FIG. 1;

FIG. 4 illustrates a diagram showing a modified example of a variable position coupling device shown in FIGS. 3A and 3B; and

FIGS. 5A through 6B illustrate diagrams showing modified examples of a coupling unit shown in FIGS. 3A and 3B.

### DETAILED DESCRIPTION

Korean Patent Application No. 10-2009-0126925, filed on December 18, 2009, in the Korean Intellectual Property Office, and entitled: "Battery Module Having Restrainer with Improved Fixing Structure and Method of Fixing Restrainer," is incorporated herein in its entirety.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

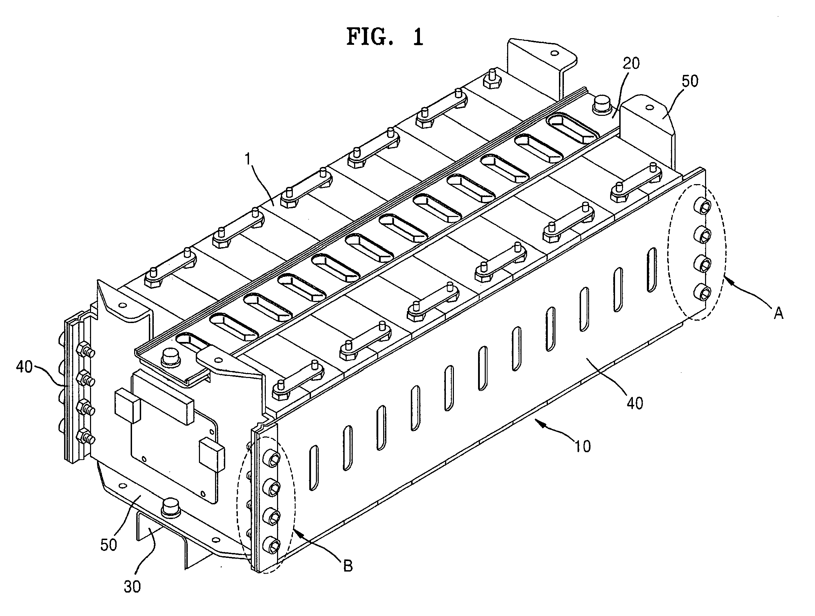

FIG. 1 illustrates a perspective view of a battery module according to an embodiment. Referring to FIG. 1, the battery module of the present embodiment may include a battery unit 10 including a plurality of batteries 1 connected in, e.g., series. The battery module may also include a plurality of plates 20, 30, and 50. The plates may include an upper plate 20 and an a lower plate 30, which may be attached to upper and lower portions of the battery unit 10. The plates may also include a pair of end plates 50 facing each other and installed on both end portions of the battery unit 10. Restrainers 40 may be coupled to the pair of end plates 50. The restrainers 40 may fix the pair of end plates 50 in order to restrain expansion of the battery unit 10. That is, when the battery unit 10 expands, a pushing force may be exerted by the battery unit 10 on the end plates 50. In turn, the restrainers 40 may hold the pair of end plates 50 so as to prevent deformation of the end plates 50 and the battery unit 10.

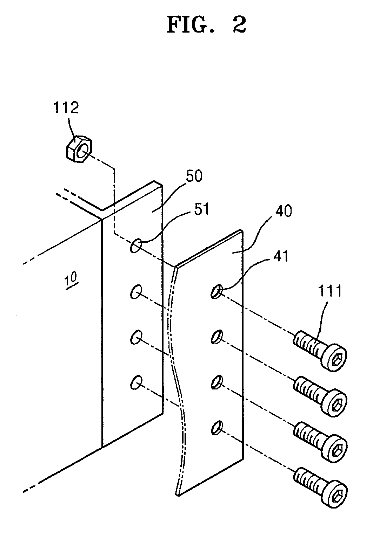

In the battery module of the present embodiment, a coupling unit for coupling the restrainer 40 to the end plate 50, as illustrated in FIGS. 2 through 3B, may be provided to prevent the deformation of the battery unit 10.

FIG. 2 illustrates an enlarged perspective view of a coupling structure of a part A of FIG. 1, i.e., a coupling structure at an end portion of the restrainer 40. In the part A, the end plate 50 and the restrainer 40 may be coupled to each other by bolts 111 and nuts 112 at a predetermined position, i.e., by a fixed position coupling device. In particular, the bolts 111 may be inserted through holes 41 and 51 respectively formed in the restrainer 40 and the end plate 51. Then, the nut 112 may be coupled to an end of the bolt 111 to be fixed. Thus, the restrainer 40 and the end plate 50 may be coupled to each other by using the bolts 111 and the nuts 112 via the holes 41 and 51 at predetermined positions. The position may become a reference position when a tensile force is applied in a variable position coupling device that will be described later.

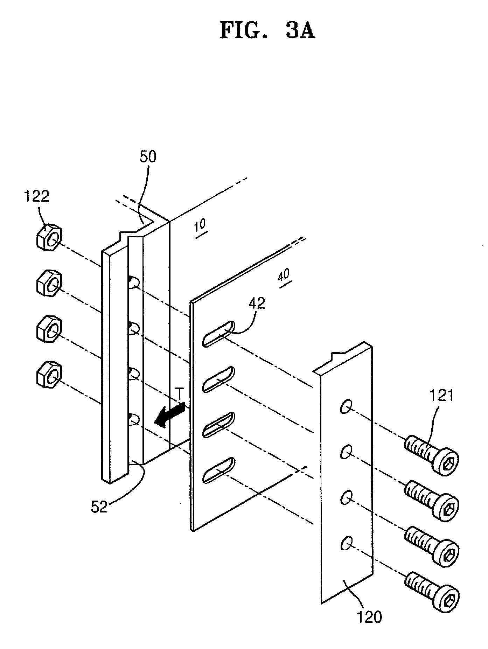

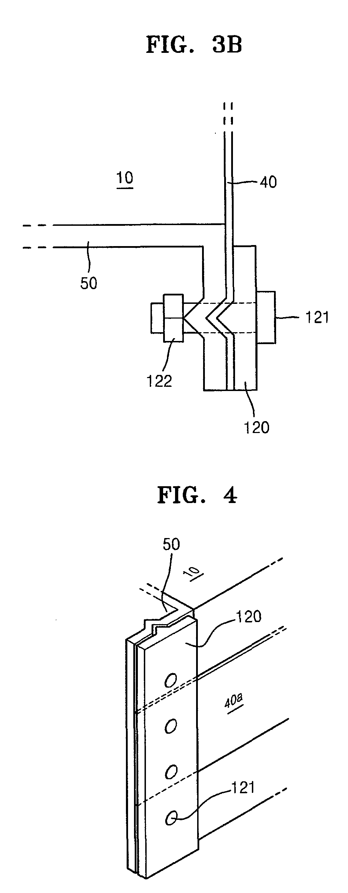

FIGS. 3A and 3B illustrate an enlarged view of a part B of FIG. 1, i.e., a coupling structure at another end of the restrainer 40. In particular, part B illustrates coupling by the variable position coupling device. That is, the restrainer 40 and the end plate 50 may not be fixed at the predetermined position. In particular, the restrainer 40 may be pulled in a direction T to strengthen, i.e., increase, the tensile force. Then, the restrainer 40 and the end plate 50 may be fixed to each other while maintaining the tensile force. In an implementation, a wedge-shaped recess 52 may be disposed in the end plate 50; and a wedge bar 120 may push and deform the restrainer 40 into the wedge-shaped recess 52 so as to press the restrainer 40 into the wedge-shaped recess 52. In other words, the restrainer 40 may be pulled by a predetermined jig (not shown) in the direction T to apply a large tensile force thereto. Then, in this state, the restrainer 40 may be pushed into the wedge-shaped recess 52 by the wedge bar 120 and be deformed. Thus, a wedge-shaped coupling portion may be formed, as illustrated in FIG. 3B. Although the coupling state of members, i.e., the restrainer 40, the end plates 50, and the wedge bar 120 may not be easily released due to the wedge-shaped recess 52, bolts 121 and nuts 122 may be coupled to the wedge-shaped coupling portion in order to strengthen the coupling state. Elongated holes 42 may be formed in the restrainer 40 and extend in the tensile force direction in order to increase a range of the holes in which the bots 121 may be inserted, because the coupling location between the restrainer 40 and the end plate 50 may be variable due to the pulling of the restrainer 40.

Processes of fixing the restrainer 40 in the above-described variable position coupling unit may be as follows.

First, an end portion of the restrainer 40 may be coupled to one of the pair of end plates 50 by using the fixed position coupling device. That is, as illustrated in FIG. 2, the end portion of the restrainer 40 may be fixed by using the bolts 111 and the nuts 112.

The other end portion of the restrainer 40 may be pulled toward the other end plate 50 (the direction T) by using, e.g., a predetermined jig, and may be extended in an elastic range of the restrainer 40.

In the above state, the wedge bar 120 may press the other end of the restrainer 40 into the wedge-shaped recess 52 of the end plate 50. Then, the wedge-shaped coupling portion shown in FIG. 3B may be formed. Then, the bolts 121 and the nuts 122 may be coupled to the wedge-shaped coupling portion in order to complete the stable coupling.

Then, an elastic force may be applied to the extended restrainer 40. Thus, the battery expansion may be effectively dealt with. Accordingly, the battery expansion may be stably restrained.

In the above description, the restrainer 40 and the end plate 50 may have the same height as each other. However, the height of the restrainer 40a may be less than the height of the end plate 50, as illustrated in FIG. 4.

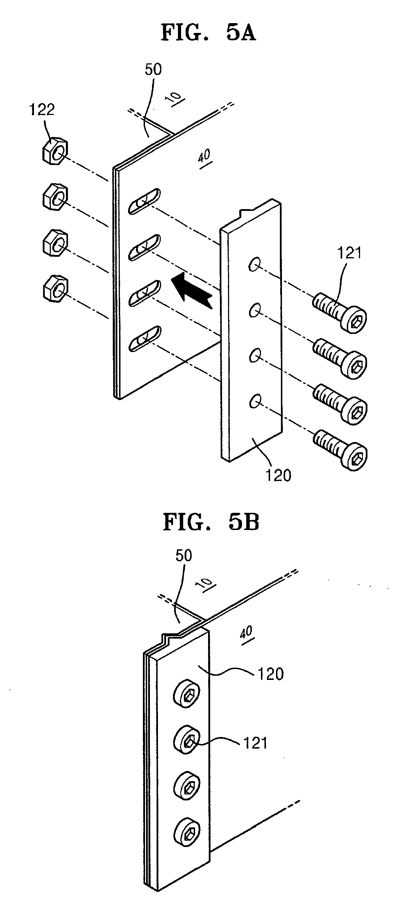

In an implementation, the wedge-shaped recess 52 may be formed in the end plate 50 in advance; and the restrainer 40 may be pressed into the wedge-shaped recess 52. However, if the end plate 50 is formed of a thin plate similar to the restrainer 40, the restrainer 40 and the end plate 50 may be pressed together by the wedge bar and deformed without previously forming the wedge-shaped recess 52. That is, as illustrated in FIGS. 5A and 5B, the wedge bar 120 may press both of the flat end plate 50 and the restrainer 40 in order to form the wedge-shaped recess simultaneously in both the restrainer 40 and the end plate 50, when the end plate 50 is formed of a thin plate that is easily processed. After that, the bolts 121 and the nuts 122 may be coupled to the restrainer 40 and the end plate 50.

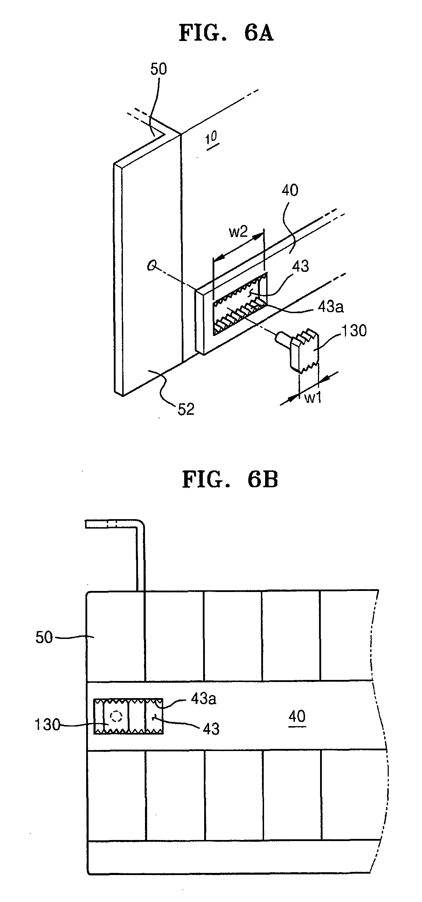

FIGS. 6A and 6B illustrate another modified example of the variable position coupling device of the coupling unit.

In the present embodiment, a jagged hole 43 and a jagged pin 130 may be used instead of the wedge-shaped coupling portion described above. That is, the restrainer 40 may include the jagged hole 43 having geared surfaces 43a. The jagged pin 130 may extend through the jagged hole 43 to the end plate 50 while matching, i.e., corresponding to, the geared surfaces 43a. A width W1 of the jagged pin 130 may be less than a width W2 of the jagged hole 43 so that a coupling location between the jagged pin 130 and the jagged hole 43 may be adjusted.

Thus, when the jagged pin 130 is inserted into the jagged hole 43 in a state where the other end of the restrainer 40 is pulled and extended, the jagged pin 130 may match the jagged surfaces 43a to be fixed and, at the same time, the jagged pin 130 may penetrate to the end plate 50 so as to couple the restrainer 40 and the end plate 50 to each other. Therefore, the battery expansion may be effectively restrained by the elastic force of the extended restrainer 40.

Therefore, according to the battery module having the above-described structure, the restrainer may be fixed while maintaining a strong restoring force against battery expansion, and thus, the deformation of the battery module caused by the battery expansion may be stably prevented.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A battery module in which a plurality of batteries (1) are connected in a battery unit (10), the battery module comprising:
a pair of end plates (50) facing each other;
at least one restrainer (40) coupled to the pair of end plates (50), the restrainer (40) being adapted for restraining expansion of the battery unit (10); and
a coupling unit for coupling the end plates (50) and the at least one restrainer (40) to each other,
wherein the coupling unit includes a variable position coupling device (B) configured to fix the at least one restrainer (40) and one of the end plates (50) while varying a coupling location between the restrainer (40) and the end plate (50),
wherein one of the end plates (50) and the restrainer (40) are coupled to each other by the variable position coupling device (B),
wherein the coupling unit further includes a fixed position coupling device (A) adapted for fixing the restrainer (40) and the other one of the end plates (50) at a predetermined fixed coupling position, and the other one of the end plates (50) and the restrainer (40) are coupled to each other by the position fixed coupling device (A), and
wherein the fixed position coupling device (A) includes:
bolts (111) penetrating through the restrainer (40) and the end plate (50), and
nuts (112) coupled to the bolts (111).

2. The battery module as claimed in claim 1, wherein the variable position coupling device (B) includes:
a jagged hole (43) penetrating the restrainer (40) and including geared surfaces (43 a) on inner walls thereof; and
a jagged pin (130) extending through the restrainer (40) and the end plate (50), the jagged pin (130) coupling the restrainer (40) and the end plate (50) to each other, and having a surface corresponding to a portion of the geared surfaces (43a) of the jagged hole (43).

3. The battery module as claimed in claim 1, wherein:
the variable position coupling device (B) includes a wedge-shaped coupling portion, and
the end plate (50) and the restrainer (40) are coupled to each other in a wedge shape.

4. The battery module as claimed in claim 3, wherein the wedge-shaped coupling portion includes:
a wedge-shaped recess (52) in the end plate (50); and
a wedge bar (120) configured to push and deform a part of the restrainer (40) so as to be matched with the wedge-shaped recess (52).

5. The battery module as claimed in claim 3, wherein the wedge-shaped coupling portion includes a wedge bar (120) configured to push and deform the end plate (50) and a part of the restrainer (40) simultaneously so as to form a wedge-shape recess (52).

6. The battery module as claimed in one of claims 4 and 5, wherein the wedge-shaped coupling portion further includes:
bolts (121) penetrating through the wedge bar (120), through elongated recesses (42) in the restrainer (40), and through the end plate (50), and
nuts (122) coupled to end portions of the bolts (121).

7. The battery module as claimed in one of the preceding claims, wherein the restrainer (40) has a height that is equal to or less than a height of the end plate (50).

8. A method of fixing a restrainer (40) to a pair of end plates (50) installed at both ends of a battery unit (10) in a battery module, the method comprising:
fixing a first end portion of the restrainer (40) to one of the end plates (50) so that a position of the restrainer (40) with respect to said end plate (50) is fixed;
applying a tensile force to the restrainer (40) by pulling a second end portion of the restrainer (40) toward the other one of the end plates (50); and
coupling the second end portion of the restrainer (40) to the other one of the end plates by means of a variable position coupling device (B) so as to fix the restrainer (40) in a state where the tensile force is applied to the restrainer (40),
wherein fixing the first end portion of the restrainer (40) to one of the end plates (50) includes:
inserting bolts (111) through the restrainer (40) and the end plate (50); and
coupling nuts (112) to ends of the bolts (111).

9. The method as claimed in claim 8, wherein coupling the second end portion of the restrainer (40) to the other one of the end plates (50) includes pressing a part of the restrainer (40) into a wedge-shaped recess (52) in the end plate (50) with a wedge bar (120) such that the part of the restrainer (40) is inserted in the wedge-shaped recess (52).

10. The method as claimed in claim 8, wherein coupling the second end portion of the restrainer (40) to the other one of the end plates (50) includes pressing the restrainer (40) and the end plate (50) together with the wedge bar (120) to couple the restrainer (40) and the end plate (50) to each other.

11. The method as claimed in one of claims 9 and 10, wherein coupling the second end portion of the restrainer (40) to the other one of the end plates (50) further includes:
inserting bolts (121) through the wedge bar (120), through elongated recesses (42) in the restrainer (40), and through the end plate (50); and
coupling nuts (122) to ends of the bolts (121).

12. The method as claimed in claim 8, wherein coupling the second end portion of the restrainer (40) to the other one of the end plates (50) further includes:
forming a jagged hole (43) in the restrainer (40) such that the jagged hole (43) includes geared surfaces (43a); and
inserting a jagged pin (130) into the jagged hole (43), the jagged pin (130) having a shape corresponding to the geared surfaces (43a) so that the jagged pin (130) couples the restrainer (40) and the end plate (50) to each other while penetrating the restrainer (40) and the end plate (50).

## Patentansprüche

1. Batteriemodul, in dem eine Vielzahl von Batterien (1) in einer Batterieeinheit (10) verbunden sind, wobei das Batteriemodul umfasst:
ein Paar von einander zugewandten Endplatten (50);
mindestens eine mit dem Paar von Endplatten (50) verbundene Unterdrückungsvorrichtung (40), wobei die Unterdrückungsvorrichtung (40) ausgebildet ist, eine Ausdehnung der Batterieeinheit (10) zu unterdrücken; und
eine Verbindungseinheit zur Verbinden der Endplatten (50) und der mindestens einen Unterdrückungsvorrichtung (40) miteinander,
wobei die Verbindungseinheit eine Verbindungseinrichtung für variierbare Positionen (B) aufweist, die so ausgeführt ist, dass sie die mindestens eine Unterdrückungsvorrichtung (40) und eine der Endplatten (50) fixiert, während eine Verbindungsstelle zwischen der Unterdrückungsvorrichtung (40) und der Endplatte (50) verändert wird, wobei eine der Endplatten (50) und die Unterdrückungsvorrichtung (40) durch die Verbindungseinrichtung (B) für variierbare Positionen miteinander verbunden sind, wobei die Verbindungseinheit ferner eine Verbindungseinrichtung für feststehende Positionen (A) aufweist, die so ausgebildet ist, dass sie die Unterdrückungsvorrichtung (40) und die andere der Endplatten (50) in einer vorbestimmten feststehenden Verbindungsposition fixiert, und die andere der Endplatten (50) und die Unterdrückungsvorrichtung (40) durch die Verbindungseinrichtung für feststehende Positionen (A) miteinander verbunden sind, und wobei die Verbindungseinrichtung für feststehende Positionen (A) umfasst:
Bolzen (111), die durch die Unterdrückungsvorrichtung (40) und die Endplatte (50) hindurchgeführt sind, sowie
mit den Bolzen (111) verbundene Muttern (112).

2. Batteriemodul nach Anspruch 1, wobei die Verbindungseinrichtung für variierbare Positionen (B) umfasst:
eine gezackte Öffnung (43), welche die Unterdrückungsvorrichtung (40) durchdringt und an ihren Innenwandungen verzahnte Flächen (43a) aufweist; und
einen gezackten Stift (130), der sich durch die Unterdrückungsvorrichtung (40) und
die Endplatte (50) erstreckt, wobei der gezackte Stift (130) die Unterdrückungsvorrichtung (40) und die Endplatte (50) miteinander verbindet und eine Oberfläche aufweist, die einem Abschnitt der verzahnten Flächen (43a) der gezackten Öffnung (43) entspricht.

3. Batteriemodul nach Anspruch 1, wobei die Verbindungseinrichtung für variierbare Positionen (B) einen keilförmigen Verbindungsabschnitt aufweist, und die Endplatte (50) und die Unterdrückungsvorrichtung (40) keilförmig miteinander verbunden sind.

4. Batteriemodul nach Anspruch 3, wobei der keilförmige Verbindungsabschnitt aufweist:
eine keilförmige Aussparung (52) in der Endplatte (50); und
eine Keilstange (120), die so ausgeführt ist, dass sie zur Anpassung an die keilförmige Aussparung (52) auf einen Teil der Unterdrückungsvorrichtung (40) Druck ausübt und diesen deformiert.

5. Batteriemodul nach Anspruch 3, wobei der keilförmige Verbindungsabschnitt eine Keilstange (120) aufweist, die so ausgeführt ist, dass sie gleichzeitig auf die Endplatte (50) und einen Teil der Unterdrückungsvorrichtung (40) Druck ausübt und diese deformiert, um so eine keilförmige Aussparung (52) auszubilden.

6. Batteriemodul nach einem der Ansprüche 4 und 5, wobei der keilförmige Verbindungsabschnitt ferner umfasst:
Bolzen (121), die die Keilstange (120), längliche Aussparungen (42) in der Unterdrückungsvorrichtung (40) sowie die Endplatte (50) durchdringen, und
Muttern (122), die mit den Endabschnitten der Bolzen (121) verbunden sind.

7. Batteriemodul nach einem der vorstehenden Ansprüche, wobei die Unterdrückungsvorrichtung (40) eine Höhe aufweist, die gleich einer oder geringer als eine Höhe der Endplatte (50) ist.

8. Verfahren zum Befestigen einer Unterdrückungsvorrichtung (40) an einem Paar von Endplatten (50), die an beiden Enden einer Batterieeinheit (10) in einem Batteriemodul angebracht sind, wobei das Verfahren umfasst:
Befestigen eines ersten Endabschnitts der Unterdrückungsvorrichtung (40) an einer der Endplatten (50) derart, dass eine Position der Unterdrückungsvorrichtung (40) bezüglich der Endplatte (50) fixiert ist;
Beaufschlagen der Unterdrückungsvorrichtung (40) mit einer Zugkraft durch Ziehen eines zweiten Endabschnitts der Unterdrückungsvorrichtung (40) zu der anderen der Endplatten (50); und
Verbinden des zweiten Endabschnitts der Unterdrückungsvorrichtung (40) mit der anderen der Endplatten mittels einer Verbindungseinrichtung für variierbare Positionen (B), um die Unterdrückungsvorrichtung (40) in einem Zustand zu fixieren, in dem die Unterdrückungsvorrichtung (40) mit der Zugkraft beaufschlagt ist,
wobei das Befestigen des ersten Endabschnitts der Unterdrückungsvorrichtung (40) an einer der Endplatten (50) umfasst:
Einführen von Bolzen (111) durch die Unterdrückungsvorrichtung (40) und die Endplatte (50); und
Verbinden von Muttern (112) mit Enden der Bolzen (111).

9. Verfahren nach Anspruch 8, wobei das Verbinden des zweiten Endabschnitts der Unterdrückungsvorrichtung (40) mit der anderen der Endplatten (50) das Drücken eines Teils der Unterdrückungsvorrichtung (40) in eine keilförmige Aussparung (52) in der Endplatte (50) mit einer Keilstange (120) umfasst, derart, dass der Teil der Unterdrückungsvorrichtung (40) in die keilförmige Aussparung (52) eingeschoben wird.

10. Verfahren nach Anspruch 8, wobei das Verbinden des zweiten Endabschnitts der Unterdrückungsvorrichtung (40) mit der anderen der Endplatten (50) das Zusammendrücken der Unterdrückungsvorrichtung (40) und der Endplatte (50) mit der Keilstange (120) umfasst, derart, dass die Unterdrückungsvorrichtung (40) und die Endplatte (50) miteinander verbunden werden.

11. Verfahren nach einem der Ansprüche 9 und 10, wobei das Verbinden des zweiten Endabschnitts der Unterdrückungsvorrichtung (40) mit der anderen der Endplatten (50) ferner umfasst:
Einführen von Bolzen (121) durch die Keilstange (120), durch längliche Aussparungen (42) in der Unterdrückungsvorrichtung (40) sowie durch die Endplatte (50); und Verbinden von Muttern (122) mit Enden der Bolzen (121).

12. Verfahren nach Anspruch 8, wobei das Verbinden des zweiten Endabschnitts der Unterdrückungsvorrichtung (40) mit der anderen der Endplatten (50) ferner umfasst:
Ausbilden einer gezackten Öffnung (43) in der Unterdrückungsvorrichtung (40) derart, dass die gezackte Öffnung (43) verzahnte Flächen (43a) aufweist; und
Einfügen eines gezackten Stiftes (130) in die gezackte Öffnung (43), wobei der gezackte Stift (130) eine Form aufweist, die den verzahnten Flächen (43a) entspricht, so dass der gezackte Stift (130) die Unterdrückungsvorrichtung (40) und die Endplatte (50) miteinander verbindet, während er die Unterdrückungsvorrichtung (40) und die Endplatte (50) durchdringt.

## Revendications

1. Module de batterie dans lequel une pluralité de batteries (1) sont reliées dans un ensemble batterie (10), le module de batterie comprenant :
une paire de plaques d'extrémité (50) tournées l'une vers l'autre ;
au moins un élément de retenue (40) accouplé à la paire de plaques d'extrémité (50), l'élément de retenue (40) étant conçu pour restreindre la dilatation de l'ensemble batterie (10) ; et
un ensemble d'accouplement pour accoupler les plaques d'extrémité (50) et l'au moins un élément de retenue (40) l'un à l'autre,
l'ensemble d'accouplement comprenant un dispositif d'accouplement à position variable (B) conçu pour fixer l'au moins un élément de retenue (40) et l'une des plaques d'extrémité (50) tout en faisant varier un emplacement d'accouplement entre l'élément de retenue (40) et la plaque d'extrémité (50),
l'une des plaques d'extrémité (50) et l'élément de retenue (40) étant accouplés l'un à l'autre par le dispositif d'accouplement à position variable (B),
l'ensemble d'accouplement comprenant, en outre, un dispositif d'accouplement à position fixe (A) conçu pour fixer l'élément de retenue (40) et l'autre des plaques d'extrémité (50) en une position d'accouplement fixe prédéterminée, et l'autre des plaques d'extrémité (50) et l'élément de retenue (40) étant accouplés l'un à l'autre par le dispositif d'accouplement à position fixe (A), et
le dispositif d'accouplement à position fixe (A) comprenant :
des boulons (111) traversant l'élément de retenue (40) et la plaque d'extrémité (50), et
des écrous (112) accouplés aux boulons (111).

2. Module de batterie selon la revendication 1, dans lequel le dispositif d'accouplement à position variable (B) comprend :
un trou dentelé (43) traversant l'élément de retenue (40) et comprenant des surfaces à engrenages (43a) sur ses parois internes ; et
une goupille dentelée (130) s'étendant à travers l'élément de retenue (40) et la plaque d'extrémité (50), la goupille dentelée (130) accouplant l'élément de retenue (40) et la plaque d'extrémité (50) l'un à l'autre, et présentant une surface correspondant à une partie des surfaces à engrenages (43a) du trou dentelé (43).

3. Module de batterie selon la revendication 1, dans lequel :
le dispositif d'accouplement à position variable (B) comprend une partie d'accouplement en forme de coin, et
la plaque d'extrémité (50) et l'élément de retenue (40) sont accouplés l'un à l'autre en une configuration en coin.

4. Module de batterie selon la revendication 3, dans lequel la partie d'accouplement en forme de coin comprend :
un évidement en forme de coin (52) dans la plaque d'extrémité (50) ; et
une barre en coin (120) conçue pour pousser et déformer une partie de l'élément de retenue (40) afin qu'elle coïncide avec l'évidement en forme de coin (52).

5. Module de batterie selon la revendication 3, dans lequel la partie d'accouplement en forme de coin comprend une barre en coin (120) conçue pour pousser et déformer simultanément la plaque d'extrémité (50) et une partie de l'élément de retenue (40) afin de former un évidement en forme de coin (52).

6. Module de batterie selon l'une quelconque des revendications 4 et 5, dans lequel la partie d'accouplement en forme de coin comprend, en outre :
des boulons (121) traversant la barre en coin (120), des évidements allongés (42) dans l'élément de retenue (40) et la plaque d'extrémité (50), et
des écrous (122) accouplés à des parties d'extrémité des boulons (121).

7. Module de batterie selon l'une quelconque des revendications précédentes, dans lequel l'élément de retenue (40) a une hauteur qui est inférieure ou égale à une hauteur de la plaque d'extrémité (50).

8. Procédé de fixation d'un élément de retenue (40) à une paire de plaques d'extrémité (50) installées aux deux extrémités d'un ensemble batterie (10) dans un module de batterie, le procédé comprenant les étapes consistant à :
fixer une première partie d'extrémité de l'élément de retenue (40) à l'une des plaques d'extrémité (50) de manière qu'une position de l'élément de retenue (40) par rapport à ladite plaque d'extrémité (50) soit fixe ;
appliquer une force de traction sur l'élément de retenue (40) en tirant une seconde partie d'extrémité de l'élément de retenue (40) vers l'autre plaque d'extrémité (50) ; et
accoupler la seconde partie d'extrémité de l'élément de retenue (40) à l'autre plaque d'extrémité au moyen d'un dispositif d'accouplement à position variable (B) afin de fixer l'élément de retenue (40) dans un état où la force de traction est appliquée sur l'élément de retenue (40),
la fixation de la première partie d'extrémité de l'élément de retenue (40) à l'une des plaques d'extrémité (50) comprenant :
l'insertion de boulons (111) à travers l'élément de retenue (40) et la plaque d'extrémité (50) ; et
l'accouplement d'écrous (112) aux extrémités des boulons (111).

9. Procédé selon la revendication 8, dans lequel l'accouplement de la seconde partie d'extrémité de l'élément de retenue (40) à l'autre de plaques d'extrémité (50) comprend la pression d'une partie de l'élément de retenue (40) dans un évidement en forme de coin (52) dans la plaque d'extrémité (50) au moyen d'une barre en coin (120) de manière que la partie de l'élément de retenue (40) soit insérée dans l'évidement en forme de coin (52).

10. Procédé selon la revendication 8, dans lequel l'accouplement de la seconde partie d'extrémité de l'élément de retenue (40) à l'autre des plaques d'extrémité (50) comprend la pression, l'un avec l'autre, de l'élément de retenue (40) et de la plaque d'extrémité (50) au moyen de la barre en coin (120) pour accoupler l'élément de retenue (40) et la plaque d'extrémité (50) l'un à l'autre.

11. Procédé selon l'une des revendications 9 et 10, dans lequel l'accouplement de la seconde partie d'extrémité de l'élément de retenue (40) à l'autre des plaques d'extrémité (50) comprend, en outre :
l'insertion de boulons (121) à travers la barre en coin (120), à travers des évidements allongés (42) dans l'élément de retenue (40), et à travers la plaque d'extrémité (50) ; et
l'accouplement d'écrous (122) aux extrémités des boulons (121).

12. Procédé selon la revendication 8, dans lequel l'accouplement de la seconde partie d'extrémité de l'élément de retenue (40) à l'autre des plaques d'extrémité (50) comprend, en outre :
la formation d'un trou dentelé (43) dans l'élément de retenue (40) de manière que le trou dentelé (43) comprenne des surfaces à engrenages (43a) ; et
l'insertion d'une goupille dentelée (130) dans le trou dentelé (43), la goupille dentelée (130) ayant une forme correspondant aux surfaces à engrenages (43a) de manière que la goupille dentelée (130) accouple l'élément de retenue (40) et la plaque d'extrémité (50) l'un à l'autre tout en pénétrant dans l'élément de retenue (40) et dans la plaque d'extrémité (50).
